# EUROPÄISCHE PATENTSCHRIFT

(11) **EP 4 034 777 B1**
(45) Veröffentlichungstag und Bekanntmachung des Hinweises auf die Patenterteilung: **13.09.2023**
(21) Anmeldenummer: 20768531.4
(22) Anmeldetag: 02.09.2020
(51) Int. Cl.: F16D 25/08, F16D 25/12

(54) **SELBSTJUSTIERENDER PNEUMATISCHER KUPPLUNGSAKTOR**
SELF-ADJUSTING PNEUMATIC CLUTCH ACTUATOR
ACTIONNEUR D'EMBRAYAGE PNEUMATIQUE À AUTO-AJUSTEMENT

(30) Priorität: 27.09.2019 DE 102019126064
(43) Veröffentlichungstag der Anmeldung: 03.08.2022
(73) Patentinhaber: ZF CV Systems Europe BV, 1170 Brüssel (BE)
(72) Erfinder: EISFELDER, Stephan, verstorben (DE)
(74) Vertreter: Ohlendorf, Henrike
(86) Internationale Anmeldenummer: PCT/EP2020/074379
(87) Internationale Veröffentlichungsnummer: WO 2021/058243

(56) Entgegenhaltungen:
- EP-B1- 2 683 960
- WO-A1-2017/046123
- DE-A1-102016 012 865

## Beschreibung

Die Erfindung betrifft einen sich selbst justierenden pneumatischen Kupplungsaktor zum Betätigen einer Kupplung eines Kraftfahrzeugs, welcher ein ringzylindrisches, axial einseitig offenes Gehäuse und einen darin axial verschiebbar angeordneten Ringkolben aufweist, zwischen denen ein Druckraum ausgebildet ist, und bei dem der Ringkolben mit einem Ausrücklager verbunden ist, welches an einer Kupplungsfeder zur Verstellung derselben aus einer Nichtbetätigungsstellung in eine Betätigungsstellung axial anliegt, bei welchen die Kupplung geschlossen beziehungsweise geöffnet ist, und bei dem eine Vorrichtung zur Kompensation einer kupplungsverschleißbedingten Änderung des Betätigungsweges zum Öffnen oder Schließen der Kupplung vorhanden ist, welche eine Spindeleinheit aufweist, die im nicht betätigten Zustand des Kupplungsaktors frei drehbar und bei betätigtem Kupplungsaktor blockiert ist.

Aktoren zur pneumatischen Betätigung von Kraftfahrzeugkupplungen sind in verschiedenen Ausführungen bekannt. Hiermit können Kraftfahrzeuge mit im Vergleich zu hydrodynamischen Drehmomentwandlern besonders kraftstoffsparenden, rein mechanisch wirkenden Kupplungen zur zeitweisen Trennung der Brennkraftmaschine von dem Getriebe des Antriebsstrangs ausgestattet werden. Allerdings können bei derartigen Kupplungsaktoren betriebsbedingte Verschleißerscheinungen der mechanischen Kupplung zu einer Veränderung des Betätigungsweges führen, wodurch sich das Ansprech- und Betätigungsverhalten des Kupplungsaktors unvorteilhaft verändern kann. Um ein kupplungsverschleißunabhängiges Ansprech- und Betätigungsverhalten des Kupplungsaktors zu erreichen, kann ein derartiger Kupplungsaktor eine Vorrichtung zur Kompensation verschleißbedingt unterschiedlich langer Betätigungswege aufweisen.

Aus der DE 10 2016 012 865 A1 ist ein derartiger Kupplungsaktor mit einer Verschleißkompensationsvorrichtung bekannt. Bei dem bekannten Kupplungsaktor ist ein Ringkolben axial verschiebbar in einem axial einseitig offenen Gehäuse unter Schaffung eines Druckraums aufgenommen. Radial innerhalb des Ringkolbens ist ein ringförmiger Ausrücklagerträger eines mit dem Ringkolben verbundenen Ausrücklagers axial verschiebbar angeordnet. Der Ausrücklagerträger weist eine kupplungsnahe Ringkammer auf, in der das Ausrücklager angeordnet ist, wobei dessen drehbarer Lagerring mit einer beispielsweise als Membranfeder ausgebildeten Kupplungsfeder zur Verstellung derselben aus einer Nichtbetätigungsstellung in eine Betätigungsstellung in Kontakt ist. Der Ringkolben ist zusammen mit dem Ausrücklagerträger axial verschiebbar angeordnet. Zum Betätigen beziehungsweise Ausrücken der Kupplung wird der Druckraum mit Druckluft beaufschlagt, wodurch der Ringkolben zusammen mit dem Ausrücklagerträger entgegen der Federkraft der Kupplungsfeder in Richtung zur Kupplungsfeder axial verschoben wird.

Radial innerhalb des Ausrücklagerträgers ist eine hohlzylindrische Spindel konzentrisch mit dem Ausrücklagerträger und dem Ringkolben koaxial zur Längsmittelachse des Kupplungsaktors angeordnet. Diese Spindel ist bis auf ein geringes Axialspiel axial unverschiebbar mit dem Ringkolben verbunden, derart, dass die Spindel im drucklosen Zustand des Druckraums um die Längsmittelachse des Kupplungsaktors drehbar und bei einem Überdruck im Druckraum nicht drehbar ist. Der Ausrücklagerträger ist mit der Spindel in der Art eines Spindel- oder Schraubantriebs mechanisch gekoppelt. Dazu weist die Spindel einen radial auswärts gerichteten und gewendelten Vorsprung auf, welcher in eine dazu korrespondierend ausgebildete sowie radial einwärts gerichtete Nut einer Außenringwand des Ausrücklagerträgers eingreift. Der Spindeltrieb ist nicht selbsthemmend ausgebildet. Daher wird eine Hemmung, welche ein unkontrolliertes Drehen der Spindel im druckbeaufschlagten Zustand der Drucckammer des Kupplungsaktors und damit eine Veränderung des axialen Ausgleichsabstands in Bezug zur Kupplungsfeder verhindert, durch ein Reib- oder Formschlusselement aufgebracht, welches zwischen einem Boden der Spindel und einem Boden des Ringkolbens angeordnet ist.

Der Ausrücklagerträger weist eine der kupplungsnahen Ringkammer gegenüberliegende kupplungsferne Ringkammer auf, in der eine Vorspannfeder angeordnet ist, die mit ihrem einem axialen Ende an dem Boden des Ringkolbens sowie mit ihrem anderen axialen Ende an einem die kupplungsnahe Ringkammer und die kupplungsferne Ringkammer des Ausrücklagerträgers trennenden Boden des Ausrücklagerträger anliegt. Die Federkraft der Vorspannfeder ist so gewählt, dass diese das Ausrücklager, in einem Kräftegleichgewicht mit der Federkraft der Kupplungsfeder, an die Kupplungsfeder in deren unbetätigten Stellung bei überdrucklosem Druckraum drückt, derart, dass zwischen dem Ringkolben und dem Ausrücklagerträger ein zur selbsttätigen Verschleißkompensation der Kupplung geeigneter axialer Ausgleichsabstand eingestellt ist. Demnach sorgt die Vorspannfeder dafür, dass der Ausrücklagerträger im unbetätigten Zustand des Kupplungsaktors an der Kupplungsfeder axial anliegt, ohne diese wegen des beschriebenen Kräftegleichgewichts in deren Kupplungsbetätigungsrichtung auszulenken.

Der axiale Ausgleichsabstand stellt sich abhängig vom Kupplungsverschleiß selbsttätig durch die Rotation der Spindel um die Längsmittelachse des Kupplungsaktors während des Übergangs von dem betätigten Zustand in den unbetätigten Zustand des Kupplungsaktors bei von dem Reib- beziehungsweise Formschlusselement freigegebener Spindel ein, wobei durch die Rotationsbewegung der Spindel der Ausrücklagerträger entsprechend des aktuellen Abnutzungsgrades der Kupplung ein Stück weiter auf die Spindel aufgeschraubt wird. Demnach sorgt die Spindel dafür, dass der Kupplungsaktor bei dessen Rückstellung von seiner Betätigungsstellung in seine Nichtbetätigungsstellung automatisch eine Verschleißkompensation durchführt, derart, dass dessen Betätigungselement unabhängig vom Kupplungsverschleiß stets Kontakt mit der Kupplungsfeder hat. Hierdurch bleibt das Ansprechverhalten, insbesondere die Betätigungsdauer, des Kupplungsaktors auch bei zunehmender Abnutzung der Kupplungsbeläge weitgehend konstant.

Der bekannte Kupplungsaktor ist durch seine hohlzylindrische Bauweise mit mehreren, ineinander verschachtelt angeordneten und zusammenwirkenden Bauteilen kompakt ausgebildet. Die radial innerhalb des Ausrücklagerträgers angeordnete hohlzylindrische Spindel ist allerdings im Vergleich zu ihrem großen radialen Durchmesser relativ dünnwandig ausgebildet. Dadurch kann es beim selbsttätigen Nachstellen der Spindel aufgrund der auf den Spindeltrieb einwirkenden Kräfte zu einem ungünstigen instabilen Verhalten des hohlzylindrischen Spindelkörpers und damit der gesamten Vorrichtung zur Verschleißkompensation kommen, was sich durch eine erhöhte Reibung zwischen dem Gewinde und dem Gegengewinde des Spindeltriebs auswirken kann. Die Herstellung einer derartigen großen dünnwandigen hohlzylindrischen Spindel ist zudem relativ schwierig und kostenaufwendig.

Aus der WO 2017/191506 A2 ist ein weiterer pneumatischer Kupplungsaktor mit einer Verschleißkompensationsvorrichtung bekannt, welche eine nicht selbsthemmende Spindel zum selbsttätigen Nachstellen eines axialen Ausgleichabstandes bei verschlissener Kupplung aufweist. Diese Vorrichtung ist ähnlich aufgebaut wie die zuvor beschriebene und weist die gleichen Nachteile auf.

Vor diesem Hintergrund lag der Erfindung die Aufgabe zugrunde, einen pneumatischen Kupplungsaktor vorzuschlagen, der eine Vorrichtung zur Kompensation einer kupplungsverschleißbedingten Änderung des Betätigungsweges zum Öffnen oder Schließen der Kupplung aufweist, die kostengünstiger und einfacher herstellbar sowie dennoch betriebssicher und langlebig ist. Insbesondere soll ein solcher Kupplungsaktor für den Einsatz im Antriebsstrang eines Fahrzeugs geeignet sein.

Die Lösung dieser Aufgabe ergibt sich aus den Merkmalen des unabhängigen Anspruchs, während vorteilhafte Ausgestaltungen und Weiterbildungen der Erfindung den abhängigen Ansprüchen entnehmbar sind.

Der Erfindung lag die Erkenntnis zugrunde, dass bei einem Kupplungsaktor mit einer Vorrichtung zur Kompensation einer kupplungsverschleißbedingten Änderung des Betätigungsweges zum Öffnen oder Schließen der Kupplung, eine in der Herstellung aufwendige und wenig stabile große zentrale hohlzylindrische Spindel zum selbststätigen Nachstellen des Kupplungsaktors bei verschlissener Kupplung mit geringen konstruktiven Änderungen durch eine in der Herstellung weniger aufwendige mehrteilige stabilere Spindeleinheit vorteilhaft ersetzt werden kann.

Die Erfindung geht daher aus von einem sich selbst justierenden pneumatischen Kupplungsaktor zum Betätigen einer Kupplung eines Kraftfahrzeugs, welcher ein ringzylindrisches, axial einseitig offenes Gehäuse und einen darin axial verschiebbar angeordneten Ringkolben aufweist, zwischen denen ein Druckraum ausgebildet ist, und bei dem der Ringkolben mit einem Ausrücklager verbunden ist, welches an einer Kupplungsfeder zur Verstellung derselben aus einer Nichtbetätigungsstellung in eine Betätigungsstellung axial anliegt, bei welchen die Kupplung geschlossen beziehungsweise geöffnet ist, und bei dem eine Vorrichtung zur Kompensation einer kupplungsverschleißbedingten Änderung des Betätigungsweges zum Öffnen oder Schlie-ßen der Kupplung vorhanden ist, welche eine Spindeleinheit aufweist, die im nicht betätigten Zustand des Kupplungsaktors frei drehbar und bei betätigtem Kupplungsaktor blockiert ist.

Zur Lösung der gestellten Aufgabe sieht die Erfindung vor, dass die Spindeleinheit aus mehreren einzelnen Spindeln besteht, welche exzentrisch zur Längsmittelachse des Kupplungsaktors und in Umfangsrichtung beabstandet zueinander angeordnet sind sowie zur Kompensation einer kupplungsverschleißbedingten Änderung des Betätigungsweges zum Öffnen oder Schließen der Kupplung synchron zusammenwirken.

Demnach werden anstelle einer großen zentralen Spindel mehrere, beispielsweise drei, kleine Spindeln über den Umfang des Kupplungsaktors verteilt angeordnet. Diese Spindeln können schraubenähnlich ausgebildet und in entsprechende Bohrungen mit Gegengewinde des Ausrücklagerträgers eingeschraubt werden. Dadurch wird eine einfacher und kostengünstiger herstellbare Vorrichtung zur Kompensation einer kupplungsverschleißbedingten Änderung des Betätigungsweges zum Öffnen oder Schließen der Kupplung geschaffen, welche zugleich die Struktur des Kupplungsaktors versteift, so dass Kippmomente und/oder Verformungen, welche zu erhöhter Reibung zwischen Gewinde und der Gegengewinde führen, die ein leichtgängiges Nachstellen der Spindeleinheit erschweren, minimiert werden können. Insbesondere sind die einzelnen schraubenähnlichen Spindeln einfacher und kostengünstiger herstellbar im Vergleich zu einer hohlzylindrischen Spindel mit einem großen Durchmesser.

Gemäß einer Ausführungsform der Erfindung ist ein sich selbst justierender pneumatischer Kupplungsaktor zum Betätigen einer Kupplung eines Kraftfahrzeugs vorgesehen, bei dem das Ausrücklager einen ringförmigen Ausrücklagerträger aufweist, der axial verschiebbar radial innerhalb des Ringkolbens angeordnet ist. Der Ausrücklagerträger weist eine kupplungsnahe Ringkammer auf, in der das Ausrücklager angeordnet ist. Dessen drehbarer Lagerring ist mit der Kupplungsfeder in Kontakt oder in Kontakt bringbar. Zum Betätigen der Kupplung durch ein Beaufschlagen des Druckraumes mit einem Druckfluid ist der Ringkolben zusammen mit dem Ausrücklagerträger entgegen der Federkraft der Kupplungsfeder in Richtung zur Kupplungsfeder axial verschiebbar angeordnet. Der Ausrücklagerträger weist überdies eine kupplungsferne Ringkammer auf, in der mindestens eine Vorspannfeder angeordnet ist. Diese Vorspannfeder liegt mit ihrem einem axialen Ende an einem Ringkolbenboden des Ringkolbens sowie mit ihrem anderen axialen Ende an einem die kupplungsnahe Ringkammer und die kupplungsferne Ringkammer des Ausrücklagerträgers trennenden Boden des Ausrücklagerträgers an. Die Federkraft der Vorspannfeder drückt das Ausrücklager in einem Kräftegleichgewicht mit der Federkraft der Kupplungsfeder an diese Kupplungsfeder in deren unbetätigten Stellung bei überdrucklosem Druckraum, um zwischen dem Ringkolben und dem Ausrücklagerträger ein zur selbsttätigen Verschleißkompensation der Kupplung geeigneten axialen Ausgleichsabstand einzustellen.

Weiter ist bei dieser Ausführungsvariante des Kupplungsaktors vorgesehen, dass die Spindeleinheit radial innerhalb des Ausrücklagerträgers angeordnet ist. Diese Spindeleinheit weist mindestens drei über den Umfang des Ausrücklagerträgers verteilt angeordnete Spindeln mit Gewinde auf, welche in dazu korrespondierend ausgebildete Bohrungen mit Gegengewinde in dem Ausrücklagerträger eingreifen, so dass der Ausrücklagerträger mit der Spindeleinheit mechanisch gekoppelt ist. Ferner ist zwischen einem jeweiligen Spindelboden der Spindeln und dem Ringkolbenboden des Ringkolbens ein Reibelement und/oder ein Formschlusselement angeordnet. Die Spindeln der Spindeleinheit sind jeweils drehbar und bis auf ein geringes Axialspiel in einem Spalt axial unverschiebbar mit dem Ringkolben verbunden. Diese Verbindung ist derartig, dass die Spindeln im drucklosen Zustand des Druckraumes jeweils um ihre Längsachse drehbar und bei einem Überdruck im Druckraum nicht drehbar sind.

Demnach ist zur mechanischen Kopplung des Ausrücklagerträgers mit der Vorrichtung zur Kompensation einer kupplungsverschleißbedingten Änderung des Betätigungsweges zum Öffnen oder Schließen der Kupplung eine Spindeleinheit mit mehreren Spindeln, bevorzugt mit drei Spindeln, vorgesehen, welche in dazu korrespondierend ausgebildete Bohrungen im Ausrücklagerträger nach Art eines Spindeltriebs beziehungsweise eines Schraubantriebs eingreifen. Hierdurch ist eine besonders leichtgängige und verwindungssteife axiale Führung der Spindeleinheit im Ausrücklagerträger gewährleistet. Die Struktur des Ausrücklagerträgers ist stabil ausgebildet. Zugleich ist dieser Kupplungsaktor kompakt ausgebildet. Dadurch, dass zwischen den Spindelböden der Spindeln und dem Ringkolbenboden des Ringkolbens Reibelemente und/oder Formschlusselemente angeordnet sind, wird ein unkontrolliertes Drehen der Spindeln im druckbeaufschlagten Zustand der Druckkammer des Kupplungsaktors und damit eine Veränderung des axialen Ausgleichsabstands in Bezug zur Kupplungsfeder zuverlässig verhindert.

Die Spindeleinheit mit mindestens drei Spindeln sorgt dafür, dass der Kupplungsaktor bei dessen Rückstellung von seiner Betätigungsstellung in seine Nichtbetätigungsstellung automatisch eine Verschleißkompensation durchführt, derart, dass dessen Betätigungselement unabhängig vom Kupplungsverschleiß stets Kontakt mit einer beispielsweise als Membranfeder ausgebildeten Kupplungsfeder hat, oder zumindest unmittelbar neben dieser steht. Hierdurch bleibt das Ansprechverhalten, insbesondere die Betätigungsdauer, des Kupplungsaktors auch bei zunehmender Abnutzung der Kupplungsbeläge weitgehend konstant. Der sich dabei einstellende Ausgleichsabstand bildet einen dem aktuellen Abnutzungsgrad der Kupplung jeweils angepassten axialen Offset. Ein pneumatisches Totvolumen beziehungsweise ein leerer Betätigungsweg des Kupplungsaktor wird vermieden.

Die Spindeleinheit kann bevorzugt drei Spindeln aufweisen, welche eine stabile und leichtgängige Verschleißkompensationsvorrichtung bilden. Alternativ dazu können auch mehr als drei Spindeln angeordnet sein. Grundsätzlich sind auch zwei diametral gegenüberliegende Spindeln möglich.

Außerdem kann vorgesehen sein, dass die Bohrungen des Ausrücklagerträgers, welche die Spindeln aufnehmen, Hülsen aufweisen, die in diese Bohrungen fest eingesetzt sind und an denen die Gegengewinde zum Eingreifen der Gewinde der Spindeln ausgebildet sind. Dadurch können der Ausrücklagerträger und der Spindeltrieb vorteilhaft aus verschiedenen Werkstoffen gefertigt werden. Beispielsweise können die Spindeln und die Hülsen aus besonders haltbarem verschleißfestem Stahl hergestellt sein. Der Ausrücklagerträger kann hingegen aus einem Leichtbaumaterial bestehen. Die Gewindehülsen können zudem als vorgefertigte Teile in die Bohrungen des Ausrücklagerträgers eingefügt werden. Dadurch vereinfacht sich die Herstellung des Kupplungsaktors.

Gemäß einer Ausführungsform der Erfindung kann vorgesehen sein, dass die Spindeln der Spindeleinheit über ein zentrales Kopplungselement, miteinander stellverbunden sind. Durch eine mechanische Kopplung der einzelnen Spindel der Spindeleinheit, beispielsweise über eine zentrisch angeordnete und drehbar gelagerte Zahnscheibe, auf der die Spindeln geführt sind, kann sichergestellt werden, dass beim Nachstellen der Spindeleinheit keine Kippmomente und Schiefstellungen durch ungleichmäßiges Verstellen der Spindeln in Bezug auf den Ausrücklagerträger auftreten.

Gemäß einer Ausführungsform der Erfindung kann vorgesehen sein, dass der Spindeleinheit mechanische Stellmittel zur Verschleißnachstellung oder zur Unterstützung der Verschleißnachstellung bei verschlissener Kupplung zugeordnet sind. Demnach kann die Verschleißnachstellung beim Übergang der Kupplung zwischen der betätigten und unbetätigten Stellung vorteilhaft durch Stellmittel, beispielsweise über Zahnräder, welche sich an einem Anschlag abstützen, erfolgen.

Schließlich betrifft die Erfindung auch eine Kupplung eines Kraftfahrzeugs, mit einem Kupplungsaktor, welcher gemäß einem der Vorrichtungsansprüche aufgebaut ist.

Die Erfindung wird nachstehend anhand von einem in der beigefügten Zeichnung dargestellten Ausführungsbeispiel näher erläutert. In der Zeichnung zeigt
Fig. 1 einen schematischen axialen Teilschnitt durch einen unbetätigten Kupplungsaktor gemäß einer Ausführungsform der Erfindung bei einer nicht verschlissenen Kupplung,
Fig. 2 einen schematisch stark vereinfachten radialen Querschnitt durch einen Kupplungsaktor gemäß Fig. 1,
Fig. 3 einen schematischen axialen Teilschnitt durch den betätigten Kupplungsaktor gemäß Fig. 1 im Fall einer nicht verschlissenen Kupplung,
Fig. 4 einen schematischen axialen Teilschnitt durch den unbetätigten Kupplungsaktor gemäß Fig. 1 im Fall einer verschlissenen Kupplung,
Fig. 5 einen schematischen axialen Teilschnitt durch den betätigten Kupplungsaktor gemäß Fig. 1 im Fall einer verschlissenen Kupplung, und
Fig. 6 einen schematischen axialen Teilschnitt durch einen unbetätigten Kupplungsaktor gemäß dem Stand der Technik bei einer nicht verschlissenen Kupplung.

Einige Bauelemente in den Figuren stimmen überein, so dass sie mit denselben Bezugsziffern bezeichnet sind.

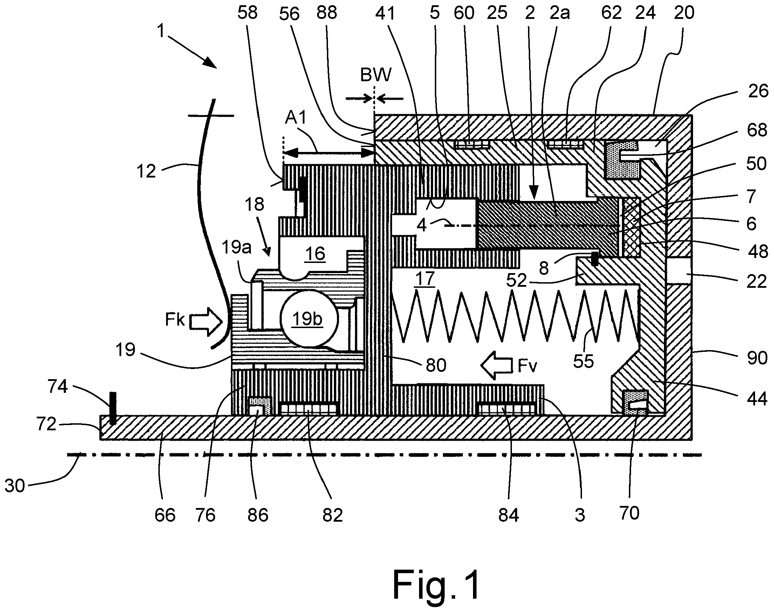

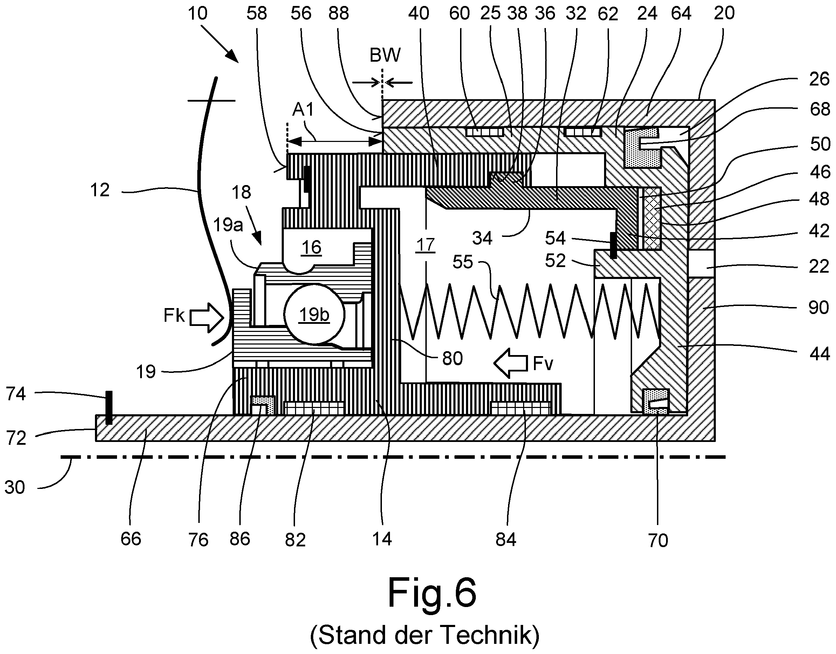

In den Figuren 1 bis 5 ist demnach ein erfindungsgemäßer, sich pneumatisch selbstjustierender Kupplungsaktor 1 dargestellt, und Fig. 6 zeigt den eingangs ausführlich beschriebenen ebenfalls pneumatisch selbstjustierenden Kupplungsaktor 10. Beide Kupplungsaktoren 1, 10 dienen zum Betätigen einer Reib-Kupplung eines Kraftfahrzeugs, die ein ringzylindrisches Gehäuse 20 und einen darin axial verschiebbar angeordneten Ringkolben 24 aufweisen, zwischen denen ein Druckraum 26 ausgebildet ist. Der Ringkolben 24 trägt jeweils ein Ausrücklager 18, welches an einer Kupplungsfeder 12 zur Verstellung derselben aus einer Nichtbetätigungsstellung in eine Betätigungsstellung axial anliegt, bei welchen die Kupplung geschlossen beziehungsweise geöffnet ist. Zudem ist bei den beiden Kupplungsaktoren 1, 10 eine Vorrichtung zur Kompensation einer kupplungsverschleißbedingten Änderung des Betätigungsweges zum Öffnen oder Schließen der Kupplung vorhanden. Diese Vorrichtung weist eine Spindeleinheit 2, 32 auf, welche im nicht betätigten Zustand des Kupplungsaktors 1, 10 frei drehbar und bei betätigtem Kupplungsaktor 1, 10 blockiert ist.

Die Fig. 6, auf die im weiteren Verlauf der Beschreibung zunächst Bezug genommen wird, zeigt einen schematischen axialen Teilschnitt durch einen unbetätigten Kupplungsaktor gemäß dem aus der eingangs erwähnten DE 10 2016 012 865 A1 bekannten Stand der Technik, und zwar im Fall einer nicht verschlissenen beziehungsweise neuen Kupplung.

Demnach weist der in Fig. 6 dargestellte Kupplungsaktor 10 ein ringförmiges, axial einseitig offenes Gehäuse 20 mit einer hohlzylindrischen Innenwand 66 und eine diese Innenwand 66 koaxial umgebende hohlzylindrische Außenwand 64 auf, welche axial endseitig und kupplungsfern durch einen sich radial erstreckenden Gehäuseboden 90 verbunden sind. In dem Gehäuseboden 90 ist eine Zuführungsöffnung 22 zur Durchleitung von Druckluft ausgebildet. In dem Gehäuse 20 ist ein Ringkolben 24 axial verschiebbar aufgenommen, der eine radial außen angeordnete hohlzylindrische Ringkolbenwand 25 und einen sich hiervon radial nach innen erstreckenden Ringkolbenboden 44 aufweist. Der Ringkolben 24 ist gegen das Gehäuse 20 mittel seines Dichtelements 70 abgedichtet, so dass zwischen dem Ringkolben 24 und dem Gehäuse 20 ein Druckraum 26 veränderlicher Größe ausgebildet ist. Die erwähnte Zuführungsöffnung 22 im Gehäuseboden 90 mündet in diesen Druckraum 26, so dass dieser zur Kupplungsbetätigung mit Druckluft beaufschlagbar ist.

Radial zwischen der hohlzylindrischen Ringkolbenwand 25 und der Innenwand 66 des Gehäuses 20 ist ein ringförmiger Ausrücklagerträger 14 angeordnet, der im Wesentlichen aus einer hohlzylindrischen Innenringwand 76, einer diese Innenringwand 76 radial umgebenden hohlzylindrischen Außenringwand 40 und einen diese beiden verbindenden, sich kreisförmig und radial erstreckenden Boden 80 besteht. Der Boden 80 des Ausrücklagerträgers 14 ist in etwa in der axialen Mitte desselben angeordnet, so dass hierdurch eine kupplungsnahe Ringkammer 16 und eine kupplungsferne Ringkammer 17 an dem Ausrücklagerträger 14 ausgebildet sind.

In der kupplungsnahen Ringkammer 16 ist ein Ausrücklager 18 angeordnet, welches eine drehbar gelagerter Innenring 19, einen mit dem Ausrücklagerträger 14 fest verbundenen Außenring 19a und radial dazwischen angeordnete kugelförmige Wälzkörper 19b aufweist. Der drehbare Innenring 19 liegt mit seiner kupplungsseitigen Stirnseite an einer als Membranfeder ausgebildeten Kupplungsfeder 12 sowohl im unbetätigten als auch im betätigten Zustand des Kupplungsaktors 10 an. Der Kupplungsaktor 10 ist gemäß der Erfindung mit einer Verschleißkompensationsvorrichtung versehen, so dass der Kontakt des Innenrings 19 des Ausrücklagers 18 sowohl bei einer neuen als auch bei einer hinsichtlich deren Reibbeläge stark abgenutzten Kupplung gegeben ist.

In der kupplungsfernen Ringkammer 17 des Ausrücklagerträgers 14 ist mindestens eine als Schraubendruckfeder ausgebildete Vorspannfeder 55 angeordnet, welche sich mit ihrem kupplungsnahen axialen Ende an dem Boden 80 des Ausrücklagerträgers 14 und mit ihrem kupplungsfernen axialen Ende an den radial ausgerichteten Ringkolbenboden 44 abstützt.

In dem in Fig. 6 gezeigten Zustand befindet sich ein neuer Kupplungsaktor 10 im unbetätigten beziehungsweise drucklosen Zustand. Die unverschlissene Kupplung des Kraftfahrzeugs ist geschlossen beziehungsweise eingekuppelt, sodass die Antriebskraft einer Brennkraftmaschine über die Kupplung zu einem antriebstechnisch nachgeordneten Getriebe gelangt.

Der Ausrücklagerträger 14 ist mit dem Ringkolben 24 mittels einer im drucklosen Zustand des Druckraumes 26 um eine Längsmittelachse 30 des Kupplungsaktors 10 drehbaren Spindeleinheit 32 mechanisch gekoppelt. Die Spindeleinheit 32 ist als eine einzelne, weitgehend hohlzylindrisch ausgebildete Spindel ausgebildet, welche konzentrisch zur Längsmittelachse 30 angeordnet ist. Die Spindeleinheit 32 wird im Folgenden als Spindel 32 benannt. Die Spindeleinheit 32 weist zur Kopplung mit dem Ringkolben 24 und dem Ausrücklagerträger 14 eine hohlzylindrische Spindelwand 34 auf, von der sich kupplungsfern ein kurzer Spindelboden 42 radial nach innen erstreckt. Die Spindeleinheit 32 ist radial und axial teilweise innerhalb des Bauraumes der kupplungsfernen Ringkammer 17 angeordnet. Der Spindelboden 42 befindet sich erkennbar außerhalb der kupplungsfernen Ringkammer 17.

Zur mechanischen Kopplung der Spindel 32 mit dem Ausrücklagerträger 14 ist an der hohlzylindrischen Spindelwand 34 ein radial auswärts gerichteter und gewendelter Vorsprung 36 ausgebildet, der in eine geometrisch korrespondierend ausgebildete sowie radial einwärts gerichtete Nut 38 in der hohlzylindrischen Außenringwand 40 des Ausrücklagerträgers 14 nach Art eines Spindeltriebs beziehungsweise eines Gewindetriebs eingreift.

Axial zwischen dem Spindelboden 42 und dem Ringkolbenboden 44 ist hier exemplarisch ein ringförmiges Reibelement 46 angeordnet, mittels dem ein unkontrolliertes Drehen der Spindel 32 in dem in Fig. 6 nicht vorliegenden, druckbeaufschlagten Zustand des Druckraumes 26 zuverlässig verhinderbar ist. Denn dies würde zu einer unerwünschten, da nicht vom Kupplungsverschleiß abhängigen Veränderung eines axialen Ausgleichsabstandes A1 zwischen dem kupplungsnahen axialen Ende 58 des Gehäuses 20 und dem kupplungsnahen axialen Ende 88 des Ausrücklagerträgers 14 führen.

Das Reibelement 46 kann an dem Spindelboden 42 oder an der kupplungsnahen Seite des Ringkolbenbodens 44 befestigt sein. Anstelle des Reibelements 46 oder zusätzlich zu diesem kann ein nicht dargestelltes Formschlusselement beziehungsweise eine geeignete Formschlussverbindung vorhanden sein. Ein solches Formschlusselement kann beispielsweise eine Stirnverzahnung sein.

Das Reibelement 46 ist in einer Ringnut 48 des Ringkolbenbodens 44 angeordnet, welche nach radial innen durch eine Mittelwand 52 des Ringkolbenbodens 44 begrenzt ist. Diese Mittelwand 52 des Ringkolbenbodens 44 erstreckt sich in Richtung zur Kupplungsfeder 12. Der Spindelboden 42 ist gleichfalls in der zur Kupplung hin offenen Ringnut 48 axial so tief angeordnet, dass die Spindel 32 dort kippsicher gehalten ist und gedreht werden kann.

Der Spindelboden 42 und damit die Spindel 32 sind in der Ringnut 48 mittels eines Sicherungselements 54 in Form eines in die Mittelwand 52 eingesetzten Sicherungsringes axial lagegesichert. Hierdurch ist die Spindel 32 bei unbelastetem Reibelement 46 um die Längsmittelachse 30 des Kupplungsaktors 10 drehbar gelagert angeordnet, aber in axialer Richtung beiderseits zuverlässig in der Ringnut 48 des Ringkolbens 24 fixiert. In dem in Fig. 6 dargestellten drucklosen Zustand des Druckraumes 26 beziehungsweise im unbetätigten Zustand des Kupplungsaktors 10 besteht zwischen dem Spindelboden 42 der Spindel 32 und dem Reibelement 46 ein geringes Axialspiel in Form eines schmalen axialen Spalts 50, sodass sich die Spindel 32 leichtgängig drehen kann.

Die axial zwischen dem Ausrücklagerträger 14 und dem Ringkolbenboden 44 angeordnete mindestens eine Vorspannfeder 55 übt auf den Ausrücklagerträger 14 eine Vorspannkraft Fv aus, welche entgegengesetzt zu einer Federkraft Fk der Kupplungsfeder 12 wirkt. In dem hier gezeigten drucklosen Zustand des Kupplungsaktors 10 besteht ein Kräftegleichgewicht zwischen der Federkraft Fk der Kupplungsfeder 12 und der Vorspannkraft Fv der Vorspannfeder 55, wobei sich unter vorheriger Herbeiführung einer entsprechenden Rotation der Spindel 32 zwischen einer kupplungsnahen Stirnfläche 56 des Ringkolbens 24 und einer kupplungsnahen Stirnfläche 58 des Ausrücklagerträgers 14 der für eine neuwertige beziehungsweise nicht verschlissene Kupplung optimale Ausgleichsabstand A1 selbsttätig eingestellt hat.

Der Ringkolben 24 ist mithilfe von mindestens zwei Führungselementen 60, 62 an der hohlzylindrischen Außenwand 64 des Gehäuses 20 axial verschiebbar geführt. Zudem ist der Ringkolben 24 ist im Bereich des Ringkolbenbodens 44 mit einem ersten Abdichtungselement 68 und einem zweiten Abdichtungselement 70 gegenüber dem Gehäuse 20 abgedichtet. Zur Begrenzung eines maximalen axialen Betätigungsweges des Kupplungsaktors 10 beziehungsweise dessen Ausrücklagerträgers 18 ist im Bereich eines freien, kupplungsnahen Endes 72 der Innenwand 66 des Gehäuses 20 ein Anschlagelement 74 befestigt. Das Anschlagelement 74 kann zum Beispiel ein Sicherungsring sein. Der Boden 80 des Ausrücklagerträgers 14 dient als axiales Widerlager für das Ausrücklager 18 beziehungsweise für die auf das Ausrücklager 18 wirkenden Axialkräfte.

In dem in Fig. 6 dargestellten unbetätigten Zustand des Kupplungsaktors 10 schlie-ßen die kupplungsnahe Stirnfläche 56 des Ringkolbens 24 und die kupplungsnahe Stirnfläche 88 der Außenwand 64 des Gehäuses 20 axial bündig aneinander ab, so dass der Betätigungsweg BW des Ringkolbens 24 des Kupplungsaktors 10 hier den Wert Null hat. Dementsprechend liegt der Ringkolbenboden 44 des Ringkolbens 24 im Wesentlichen vollständig an dem Gehäuseboden 90 an, wobei lediglich ein kleines Totvolumen radial außen im Bereich des ersten Dichtelements 68 verbleibt.

Der Ausrücklagerträger 14 ist mittels eines ersten Führungselements 82 und eines zweiten Führungselements 84 axial verschiebbar an der Innenwand 66 des Gehäuses 20 geführt sowie gegenüber dieser mittels eines dritten Dichtelements 86 mit einer L-förmigen Querschnittsgeometrie abgedichtet, wodurch sich im Zusammenwirken mit dem im Gehäuse 20 geführten Ringkolben 24 und der Spindel 32 eine zuverlässige teleskopartige Führung des Ausrücklagerträgers 18 in Bezug zur Kupplungsfeder 12 ergibt.

Die erwähnten Führungselemente 60, 62, 82, 84 sind bevorzugt mit einem mechanisch hochbelastbaren und einen geringen Gleitreibungskoeffizienten aufweisenden Kunststoffmaterial gebildet, wie zum Beispiel Polytetrafluorethylen (PTFE, Teflon^{®}) oder Polyethylen (PE), während die erwähnten Dichtelemente 68, 70, 86 mit einem geeigneten Elastomerblock, zum Beispiel aus Gummi oder dergleichen, realisiert sind.

Die Figuren 1 bis 5 zeigen einen Kupplungsaktor 1 mit den Merkmalen der Erfindung. Dieser Kupplungsaktor 1 weist im Unterschied zu dem zuvor beschriebenen bekannten Kupplungsaktor 10 der Fig. 6 eine Spindeleinheit 2 auf, welche aus mehreren, hier vorliegend aus drei baugleichen Spindeln 2a, 2b, 2b, besteht.

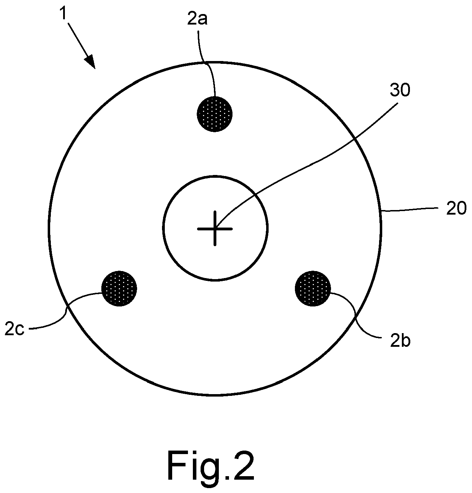

Die Fig. 2 zeigt in einer Querschnittsansicht beispielhaft eine Anordnung, bei der die drei Spindeln 2a, 2b, 2c in gleichen Winkelabständen über den Umfang des Kupplungsaktors 1 verteilt angeordnet sind, derart, dass diese quasi eine stabile Ebene aufspannen. In den Figuren 1 sowie 3 bis 5 ist lediglich eine der drei Spindeln 2a, 2b, 2c im axialen Schnitt erkennbar, nämlich die erste Spindel 2a. Im Folgenden wird exemplarisch nur die erste Spindel 2a sowie ihre Anordnung im Kupplungsaktor 1 näher beschrieben. Diese Beschreibung gilt analog auch für die zweite und die dritte Spindel 2b, 2c.

Demnach ist gemäß Fig. 1 ein Ausrücklagerträger 3 mit einem Ringkolben 24 mittels einer im drucklosen Zustand des Druckraums 26 um ihre eigene Längsachse 4 drehbaren Spindel 2a mechanisch gekoppelt. Die Spindel 2a ist als eine schraubenähnliche Spindel mit Gewinde ausgebildet. Der Spindelkörper der Spindel 2a ist mit dem Ringkolben 24 und dem Ausrücklagerträger 3 gekoppelt. Der Spindelkörper greift dazu kupplungsnah in eine Bohrung 5 im Ausrücklagerträger 3 ein. Die Bohrung 5 des Ausrücklagerträgers 3 ist als eine Axialbohrung in einer radial verbreiterten und dadurch verstärkten Außenringwand 41 des Kupplungsaktors 1 ausgebildet. Der Spindelkörper weist kupplungsfern einen Spindelboden 6 auf. Die Spindel 2a ist radial und axial teilweise innerhalb des Bauraumes der kupplungsfernen Ringkammer 17 angeordnet. Der Spindelboden 6 befindet sich erkennbar außerhalb der kupplungsfernen Ringkammer 17. Zur mechanischen Kopplung der Spindel 2a mit dem Ausrücklagerträger 3 ist am Mantel des Spindelkörpers ein Gewinde ausgebildet, das in ein geometrisch korrespondierend ausgebildetes Gegengewinde der Bohrung 5 des Ausrücklagerträgers 3 nach Art eines Spindeltriebs beziehungsweise eines Gewindetriebs eingreift. Gewinde und Gegengewinde an der Spindel 2a beziehungsweise in der Bohrung 5 des Ausrücklagerträgers 3 sind in den Figuren 1 sowie 2 bis 5 nicht explizit dargestellt.

Axial zwischen dem Spindelboden 6 und dem Ringkolbenboden 44 ist ein Reibelement 7 angeordnet, welches baugleich mit dem ringförmigen Reibelement 46 gemäß Fig. 6 sein kann. Mittels des Reibelements 7 ist ein unkontrolliertes Drehen der Spindel 2a in dem in Fig. 1 nicht vorliegenden, druckbeaufschlagten Zustand des Druckraums 26 zuverlässig verhinderbar, welches zu einer unerwünschten, da nicht vom Kupplungsverschleiß abhängigen Veränderung eines axialen Ausgleichsabstandes A1 zwischen dem kupplungsnahen axialen Ende 58 des Gehäuses 20 und dem kupplungsnahen axialen Ende 88 des Ausrücklagerträgers 3 führen würde.

Das Reibelement 7 ist an der kupplungsnahen Seite des Ringkolbenbodens 44 befestigt. Anstelle des Reibelements 7 oder zusätzlich zu diesem kann ein nicht dargestelltes Formschlusselement beziehungsweise eine geeignete Formschlussverbindung vorhanden sein. Ein solches Formschlusselement kann beispielsweise eine Stirnverzahnung sein.

Das Reibelement 7 ist in einer Ringnut 48 des Ringkolbenbodens 44 angeordnet, welche nach radial innen durch eine Mittelwand 52 des Ringkolbenbodens 44 begrenzt ist. Diese Mittelwand 52 des Ringkolbenbodens 44 erstreckt sich in Richtung zur Kupplungsfeder 12. Der Spindelboden 6 ist gleichfalls in der zur Kupplung hin offenen Ringnut 48 axial so tief angeordnet, dass die Spindel 2a dort kippsicher gehalten ist und gedreht werden kann.

Der Spindelboden 6 und damit die Spindel 2a sind in der Ringnut 48 mittels eines Sicherungselements 8 in Form eines in die Mittelwand 52 eingesetzten Sicherungsringes axial lagegesichert. Hierdurch ist die Spindel 2a bei unbelastetem Reibelement 7 um ihre eigene Längsachse 4 drehbar gelagert angeordnet, aber in axialer Richtung beiderseits zuverlässig in der Ringnut 48 des Ringkolbens 24 fixiert. In dem in Fig. 1 dargestellten drucklosen Zustand des Druckraumes 26 beziehungsweise im unbetätigten Zustand des Kupplungsaktors 1 besteht zwischen dem Spindelboden 6 der Spindel 2a und dem Reibelement 7 ein geringes Axialspiel in Form eines schmalen axialen Spalts 50, sodass sich die Spindel 2a leichtgängig drehen kann.

Die axial zwischen dem Ausrücklagerträger 3 und dem Ringkolbenboden 44 angeordnete mindestens eine Vorspannfeder 55 übt auf den Ausrücklagerträger 3 eine Vorspannkraft Fv aus, welche entgegengesetzt zu einer Federkraft Fk der Kupplungsfeder 12 wirkt. In dem hier gezeigten drucklosen Zustand des Kupplungsaktors 1 besteht ein Kräftegleichgewicht zwischen der Federkraft Fk der Kupplungsfeder 12 und der Vorspannkraft Fv der Vorspannfeder 55, wobei sich unter vorheriger Herbeiführung einer entsprechenden synchronen Rotation der drei Spindeln 2a, 2b, 2c der Spindeleinheit 2 zwischen einer kupplungsnahen Stirnfläche 56 des Ringkolbens 24 und einer kupplungsnahen Stirnfläche 58 des Ausrücklagerträgers 3 der für eine neuwertige beziehungsweise nicht verschlissene Kupplung optimale Ausgleichsabstand A1 selbsttätig eingestellt hat.

Im Übrigen entsprechen der konstruktive Aufbau sowie die Funktionsweise des erfindungsgemäßen Kupplungsaktors 1 gemäß Fig. 1 dem im Zusammenhang mit der Fig. 6 erläuterten bekannten Kupplungsaktor 10, sodass zur Vermeidung inhaltlicher Wiederholungen an dieser Stelle auf die einschlägigen Beschreibungsteile verwiesen wird.

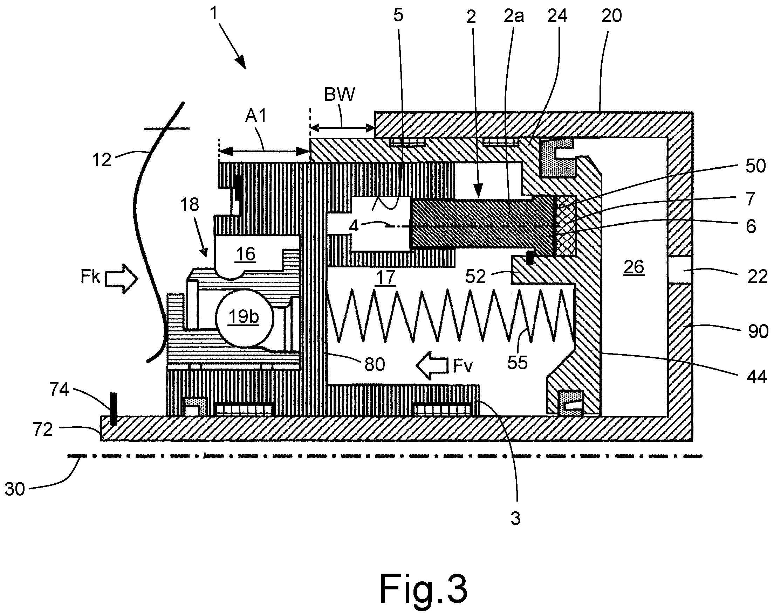

Im Folgenden wird die Funktionsweise des erfindungsgemäßen Kupplungsaktors 1 anhand der weiteren Figuren 3 bis 5 beschrieben.

Durch das Beaufschlagen des Druckraums 26 mit Druckluft durch die Zuführungsöffnung 22 im Gehäuseboden 90 wird der Kupplungsaktor 1 in den in Fig. 3 dargestellten betätigten Zustand versetzt. Im Zuge dieses Vorgangs wird der Ringkolben 24 um den axialen Betätigungsweg BW in Richtung zu der Kupplungsfeder 12 und entgegen der Federkraft Fk derselben aus dem Gehäuse 20 heraus geschoben, wodurch die Kupplung des Kraftfahrzeugs mittels des im Ausrücklagerträger 3 aufgenommenen Ausrücklagers 18 betätigt beziehungsweise geöffnet wird, und somit der Kraftfluss zwischen der Brennkraftmaschine und dem weiteren Antriebsstrang des Kraftfahrzeugs temporär unterbrochen ist.

Während dieses Vorgangs bleibt der zum optimalen Betrieb einer neuen beziehungsweise nicht verschlissenen Kupplung optimale axiale Ausgleichsabstand A1 im Idealfall unverändert, da die Spindeln 2a, 2b, 2c der Spindeleinheit 2 durch das Betätigen des Ringkolbens 24 axial gegen das Reibelement 7 gedrückt werden. Aufgrund der starken Blockierwirkung beziehungsweise Bremswirkung des Reibelements 7 an den Spindeln 2a, 2b, 2c der Spindeleinheit 2 werden diese jeweils an einer Drehung um ihre Längsachse 4 zuverlässig gehindert. Die Reibwirkung entsteht dabei erkennbar jeweils zwischen dem Spindelboden 6 der Spindel 2a, 2b, 2c und dem Ringkolbenboden 44 des Ringkolbens 24. Der axiale Spalt 50 zwischen dem Reibelement 7 und dem jeweiligen Spindelboden 6 ist demzufolge in dem in Fig. 3 gezeigten betätigten Zustand des Kupplungsaktors 1 nicht mehr vorhanden beziehungsweise gleich Null (vergleiche mit Fig. 1).

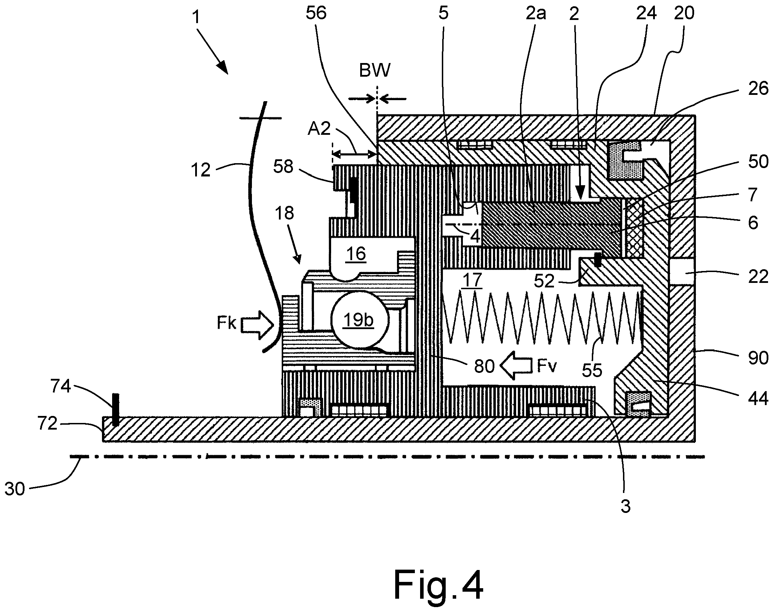

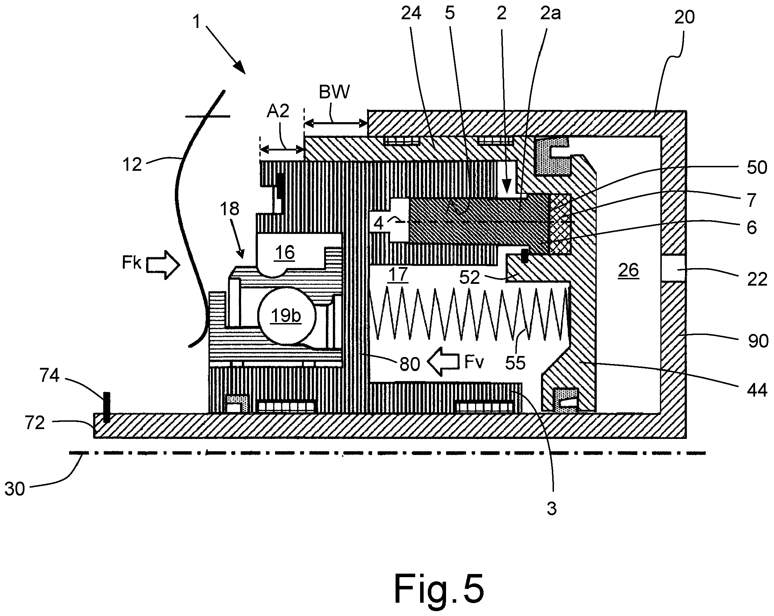

Die Figuren 4 und 5, auf die im weiteren Verlauf der Beschreibung zugleich Bezug genommen wird, zeigen einen schematischen axialen Teilschnitt durch einen unbetätigten beziehungsweise betätigten Kupplungsaktor 1 gemäß den Figuren 1 bis 3, jeweils bei einer hinsichtlich derer Reibbeläge verschlissenen Kupplung.

In dem in Fig. 4 dargestellten Zustand befindet sich der Kupplungsaktor 1 im unbetätigten Zustand, da der Druckraum 26 nicht mit Druckluft beaufschlagt ist und der Ringkolbenboden 44 des Ringkolbens 24 praktisch vollständig an dem Gehäuseboden 90 des Gehäuses 20 anliegt. Zwischen dem Spindelboden 6 der jeweiligen Spindel 2a, 2b, 2c und dem Reibelement 7 besteht im drucklosen, unbetätigten Zustand des Kupplungsaktors 1 wiederum der schmale axiale Spalt 50, der eine leichtgängige Eigendrehung der Spindeln 2a, 2b, 2c zulässt.

Zwischen der von der Kupplungsfeder 12 aufgebrachten Federkraft Fk und der entgegengesetzt gerichteten Vorspannkraft Fv der Vorspannfeder 55 besteht auch hier ein Kräftegleichgewicht, wobei sich jedoch infolge des verschlissenen Zustands der Kupplung ein im Vergleich zur Fig. 1 reduzierter axialer Ausgleichsabstand A2 zwischen der kupplungsnahen Stirnfläche 56 des Ringkolbens 24 und der kupplungsnahen Stirnfläche 58 des Ausrücklagerträgers 3 eingestellt hat. Diese selbsttätige, vom Kupplungsverschleiß abhängige Anpassung des axialen Ausgleichsabstands A2 erfolgt durch die synchrone Rotation der Spindeln 2a, 2b, 2c um ihre jeweilige Längsachse 4 während des Übergangs von dem betätigten Zustand in den unbetätigten Zustand des Kupplungsaktors 1 bei zumindest teilweise vom Reibelement 7 freigegebenen Spindeln 2a, 2b, 2c.

Durch diese Rotationsbewegung der Spindeln 2a, 2b, 2c wird der Ausrücklagerträger 3 aufgrund der zwischen diesem und den Spindeln 2a, 2b, 2c bestehenden, leichtgängigen spindelartigen beziehungsweise gewindeartigen mechanischen Kopplung faktisch ein Stück weiter auf die Spindeln 2a, 2b, 2c der Spindeleinheit 2 aufgeschraubt, wodurch sich der Ausgleichsabstand A2 in Abhängigkeit vom jeweiligen Verschleiß beziehungsweise Abnutzungsgrad der Reibbeläge der Kupplung selbsttätig reduziert, so dass eine Betätigungszeit des Kupplungsaktors 1 im Wesentlichen über die gesamte Gebrauchsdauer einer Kraftfahrzeugkupplung hinweg konstant bleibt.

In Fig. 5 befindet sich der Kupplungsaktor 1 wiederum im betätigten Zustand, wobei der Druckraum 26 über die Zuführungsöffnung 22 im Gehäuseboden 90 mit Druckluft beaufschlagt ist. Hierdurch ist der Ringkolben 24 um den Betätigungsweg BW aus dem Gehäuse 20 entgegen der Kraftwirkung FK der Kupplungsfeder 12 herausgefahren und somit die Kupplung des Kraftfahrzeugs betätigt. Da der Ringkolben 24 hierbei in Richtung zum Spindelboden 6 gedrückt wird, ist der Ringspalt 50 dadurch geschlossen. Hierdurch verhindert das Reibelement 7 ein Drehen der Spindeln 2a, 2b, 2c zuverlässig. Bei der Rückkehr des Ringkolbens 24 aus dem betätigten Zustand in den unbetätigten Zustand stellt sich durch die Rotation der Spindeln 2a, 2b, 2c um ihre jeweilige Längsachse 4 selbsttätig ein axialer Ausgleichsabstand A2 ein, der bei der nächsten Kupplungsbetätigung durch den Kupplungsaktor 1 im Wesentlichen unverändert aufrechterhalten bleibt.

### Bezugszeichenliste (Teil der Beschreibung)

- 1: Kupplungsaktor (Ausführungsform der Erfindung)
- 2: Spindeleinheit des Kupplungsaktors 1
- 2a: Erste Spindel der Spindeleinheit 2
- 2b: Zweite Spindel der Spindeleinheit 2
- 2c: Dritte Spindel der Spindeleinheit 2
- 3: Ausrücklagerträger des Kupplungsaktors 1
- 4: Längsachse der Spindel
- 5: Bohrung des Ausrücklagerträgers 3
- 6: Spindelboden einer Spindel
- 7: Reibelement
- 8: Sicherungselement
- 10: Kupplungsaktor (Stand der Technik)
- 12: Kupplungsfeder
- 14: Ausrücklagerträger (Stand der Technik)
- 16: Kupplungsnahe Ringkammer des Ausrücklagerträgers
- 17: Kupplungsferne Ringkammer des Ausrücklagerträgers
- 18: Ausrücklager
- 19: Drehbarer Lagerring (Innenring) des Ausrücklagers
- 19a: Feststehender Außenring des Ausrücklagers
- 19b: Wälzkörper
- 20: Ringzylindrisches Gehäuse
- 22: Zuführungsöffnung für Druckluft im Gehäuse
- 24: Ringkolben
- 25: Ringkolbenwand
- 26: Druckraum
- 30: Längsmittelachse des Kupplungsaktors
- 32: Spindeleinheit, Spindel (Stand der Technik)
- 34: Spindelwand der Spindel 32
- 36: Vorsprung der Spindel 32
- 38: Nut in Außenringwand 40 des Ausrücklagerträgers 14
- 40: Außenringwand des Ausrücklagerträgers 14 (Stand der Technik)
- 41: Außenringwand des Ausrücklagerträgers 3
- 42: Spindelboden der Spindel 32
- 44: Ringkolbenboden
- 46: Reibelement (Stand der Technik)
- 48: Ringnut am Ringkolbenboden 44
- 50: Axialer Spalt
- 52: Mittelwand am Ringkolbenboden 44
- 54: Sicherungselement (Stand der Technik)
- 55: Vorspannfeder
- 56: Stirnfläche des Ringkolbens 24 (dessen axiales Ende)
- 58: Stirnfläche des Ausrücklagerträgers 14 (dessen axiales Ende)
- 60: Erstes Führungselement am Ringkolben
- 62: Zweites Führungselement am Ringkolben
- 64: Außenwand des Gehäuses 20
- 66: Innenwand des Gehäuses 20
- 68: Erstes Dichtelement
- 70: Zweites Dichtelement
- 72: Freies Ende der Innenwand 66 des Gehäuses 20
- 74: Anschlagelement
- 76: Innenringwand des Ausrücklagerträger
- 80: Boden des Ausrücklagerträger
- 82: Erstes Führungselement am Ausrücklagerträger
- 84: Zweites Führungselement am Ausrücklagerträger
- 86: Drittes Dichtelement des Ausrücklagerträgers
- 88: Stirnfläche des Gehäuses 20 (dessen axiales Ende)
- 90: Gehäuseboden
- Fk: Federkraft der Kupplungsfeder
- Fk: Vorspannkraft der Vorspannfeder
- A1: Axialer Ausgleichsabstand bei neuer Kupplung
- A2: Axialer Ausgleichsabstand bei verschlissener Kupplung
- BW: Betätigungsweg

## Patentansprüche

1. Selbstjustierender pneumatischer Kupplungsaktor (1) zum Betätigen einer Kupplung eines Kraftfahrzeugs, welcher ein ringzylindrisches, axial einseitig offenes Gehäuse (20) und einen darin axial verschiebbar angeordneten Ringkolben (24) aufweist, zwischen denen ein Druckraum (26) ausgebildet ist, und bei dem der Ringkolben (24) mit einem Ausrücklager (18) verbunden ist, welches an einer Kupplungsfeder (12) zur Verstellung derselben aus einer Nichtbetätigungsstellung in eine Betätigungsstellung axial anliegt, bei welchen die Kupplung geschlossen beziehungsweise geöffnet ist, und bei dem eine Vorrichtung zur Kompensation einer kupplungsverschleißbedingten Änderung des Betätigungsweges zum Öffnen oder Schließen der Kupplung vorhanden ist, welche eine Spindeleinheit (2) aufweist, die im nicht betätigten Zustand des Kupplungsaktors (1) frei drehbar und bei betätigtem Kupplungsaktor (1) blockiert ist,
**dadurch gekennzeichnet,**
**dass** die Spindeleinheit (2) aus mehreren einzelnen Spindeln (2a, 2b, 2c) besteht, welche exzentrisch zur Längsmittelachse (30) des Kupplungsaktors (1) und in Umfangsrichtung beabstandet zueinander angeordnet sind sowie zur Kompensation einer kupplungsverschleißbedingten Änderung des Betätigungsweges zum Öffnen oder Schließen der Kupplung synchron zusammenwirken.

2. Kupplungsaktor nach Anspruch 1, **dadurch gekennzeichnet,**
- **dass** das Ausrücklager (18) einen ringförmigen Ausrücklagerträger (3) aufweist, der axial verschiebbar radial innerhalb des Ringkolbens (24) angeordnet ist,
- **dass** der Ausrücklagerträger (3) eine kupplungsnahe Ringkammer (16) aufweist, in der das Ausrücklager (18) angeordnet ist, dessen drehbarer Lagerring (19) mit der Kupplungsfeder (12) in Kontakt ist oder in Kontakt bringbar ist,
- **dass** zum Betätigen der Kupplung durch ein Beaufschlagen des Druckraumes (26) mit einem Druckfluid der Ringkolben (24) zusammen mit dem Ausrücklagerträger (3) entgegen der Federkraft (Fk) der Kupplungsfeder (12) in Richtung zur Kupplungsfeder (12) axial verschiebbar angeordnet ist,
- **dass** der Ausrücklagerträger (3) eine kupplungsferne Ringkammer (17) aufweist, in der mindestens eine Vorspannfeder (55) angeordnet ist,
- **dass** die Vorspannfeder (55) mit ihrem einem axialen Ende an einem Ringkolbenboden (44) des Ringkolbens (24) sowie mit ihrem anderen axialen Ende an einem die kupplungsnahe Ringkammer (16) und die kupplungsferne Ringkammer (17) des Ausrücklagerträgers (3) trennenden Boden (80) des Ausrücklagerträgers (3) anliegt, wobei die Federkraft (Fv) der Vorspannfeder (55) das Ausrücklager (18) in einem Kräftegleichgewicht mit der Federkraft (Fk) der Kupplungsfeder (12) an diese Kupplungsfeder (12) in deren unbetätigten Stellung bei überdrucklosem Druckraum (26) drückt, um zwischen dem Ringkolben (24) und dem Ausrücklagerträger (3) ein zur selbsttätigen Verschleißkompensation der Kupplung geeigneten axialen Ausgleichsabstand (A1, A2) einzustellen,
- **dass** die Spindeleinheit (2) radial innerhalb des Ausrücklagerträgers (3) angeordnet ist,
- **dass** die Spindeleinheit (2) mindestens drei über den Umfang des Ausrücklagerträgers (3) verteilt angeordnete Spindeln (2a, 2b, 2c) mit Gewinde aufweist, welche in dazu korrespondierend ausgebildete Bohrungen (5) mit Gegengewinde in dem Ausrücklagerträger (3) eingreifen, so dass der Ausrücklagerträger (3) mit der Spindeleinheit mechanisch gekoppelt ist,
- **dass** zwischen einem jeweiligen Spindelboden (6) der Spindeln (2a, 2b,2c) und dem Ringkolbenboden (44) des Ringkolbens (24) ein Reibelement (7) und/oder ein Formschlusselement angeordnet ist,
- und **dass** die Spindeln (2a, 2b, 2c) der Spindeleinheit (2) jeweils drehbar sowie bis auf ein geringes Axialspiel in einem Spalt (50) axial unverschiebbar mit dem Ringkolben (24) verbunden sind, wobei diese Verbindung derartig ist, dass die Spindeln (2a, 2b, 2c) im drucklosen Zustand des Druckraumes (26) jeweils um ihre Längsachse (4) drehbar und bei einem Überdruck im Druckraum (26) nicht drehbar sind.

3. Kupplungsaktor nach Anspruch 1 oder 2, **dadurch gekennzeichnet, dass** die Bohrungen (5) des Ausrücklagerträgers (3), welche die Spindeln (2a, 2b, 2c) aufnehmen, Hülsen aufweisen, die in diese Bohrungen (5) fest eingesetzt sind und an denen die Gegengewinde zum Eingreifen der Gewinde der Spindeln (2a, 2b, 2c) ausgebildet sind.

4. Kupplungsaktor nach einem der Ansprüche 1 bis 3, **dadurch gekennzeichnet, dass** die Spindeln (2a, 2b, 2c) der Spindeleinheit (2) über ein zentrales Kopplungselement, wie eine Zahnscheibe, miteinander stellverbunden sind.

5. Kupplungsaktor nach einem der Ansprüche 1 bis 4, **dadurch gekennzeichnet, dass** der Spindeleinheit (2) mechanische Stellmittel zur Verschleißnachstellung oder zur Unterstützung der Verschleißnachstellung bei verschlissener Kupplung zugeordnet sind.

6. Kupplung eines Kraftfahrzeugs Fahrzeug, mit einem Kupplungsaktor (1), welcher gemäß einem der Vorrichtungsansprüche 1-5 aufgebaut ist.

## Claims

1. Self-adjusting pneumatic clutch actuator (1) for actuating a clutch of a motor vehicle, which clutch actuator has an annular-cylindrical housing (20) that is axially open on one side, and an annular piston (24) arranged axially displaceably therein, between which a pressure chamber (26) is formed, and wherein the annular piston (24) is connected to a release bearing (18) which abuts axially against a clutch spring (12) for adjustment thereof from a non-actuating position into an actuating position, in which the clutch is closed or open, respectively, and wherein a device for compensating for a change in the actuation path, caused by clutch wear, in order to open or close the clutch is provided, which device has a spindle unit (2) which is freely rotatable in the non-actuated state of the clutch actuator (1) and is blocked when the clutch actuator (1) is actuated,
**characterized in that**
the spindle unit (2) consists of a plurality of individual spindles (2a, 2b, 2c) which are arranged eccentrically with respect to the longitudinal center axis (30) of the coupling actuator (1) and at a distance from one another in the circumferential direction and interact synchronously to compensate for a change in the actuation path, caused by clutch wear, in order to open or close the clutch.

2. Clutch actuator according to claim 1, **characterized**
- **in that** the release bearing (18) has an annular release bearing support (3) which is arranged radially within the annular piston (24) so as to be axially displaceable,
- **in that** the release bearing support (3) has an annular chamber (16) close to the clutch, in which chamber the release bearing (18) is arranged, the rotatable bearing ring (19) of which is or can be brought into contact with the clutch spring (12),
- **in that,** in order to actuate the clutch by applying a pressure fluid to the pressure chamber (26), the annular piston (24), together with the release bearing support (3), is arranged so as to be axially displaceable in the direction of the clutch spring (12) counter to the spring force (Fk) of the clutch spring (12),
- **in that** the release bearing support (3) has an annular chamber (17) remote from the clutch, in which chamber at least one pretensioning spring (55) is arranged,
- **in that** the pretensioning spring (55) abuts with one axial end thereof against an annular piston base (44) of the annular piston (24) and with the other axial end thereof against a base (80) of the release bearing support (3) that separates the annular chamber (16) close to the clutch and the annular chamber (17) of the release bearing support (3) remote from the clutch, the spring force (Fk) of the pretensioning spring (55) pressing the release bearing (18), in a force equilibrium with the spring force (Fk) of the clutch spring (12), against this clutch spring (12) in the non-actuated position thereof when the pressure chamber (26) is unpressurized, in order to adjust, between the annular piston (24) and the release bearing support (3), an axial compensation distance (A1, A2) suitable for automatic wear compensation of the clutch,
- **in that** the spindle unit (2) is arranged radially within the release bearing support (3),
- **in that** the spindle unit (2) has at least three spindles (2a, 2b, 2c) which are distributed over the circumference of the release bearing support (3) and which engage in correspondingly designed bores (5) having a counter-thread in the release bearing support (3), so that the release bearing support (3) is mechanically coupled to the spindle unit,
- **in that** a friction element (7) and/or a form-fitting element is arranged between a relevant spindle base (6) of the spindles (2a, 2b, 2c) and the annular piston base (44) of the annular piston (24),
- and **in that** the spindles (2a, 2b, 2c) of the spindle unit (2) are each connected to the annular piston (24) so as to be rotatable as well as axially immovable except for a small axial play in a gap (50), this connection being such that the spindles (2a, 2b, 2c), in the pressureless state of the pressure chamber (26), are each rotatable about their longitudinal axis (4) and, when there is an overpressure in the pressure chamber (26), are not rotatable.

3. Clutch actuator according to claim 1 or 2, **characterized in that** the bores (5) of the release bearing support (3) that receive the spindles (2a, 2b, 2c) have sleeves which are fixedly inserted into these bores (5) and on which the counter-threads are formed for engaging the threads of the spindles (2a, 2b, 2c).

4. Clutch actuator according to any of claims 1 to 3, **characterized in that** the spindles (2a, 2b, 2c) of the spindle unit (2) are adjustingly connected to one another via a central coupling element such as a toothed disk.

5. Clutch actuator according to any of claims 1 to 4, **characterized in that** the spindle unit (2) is associated with mechanical adjusting means for wear readjustment or for assisting the wear readjustment when the coupling is worn.

6. Clutch of a motor vehicle vehicle, comprising a clutch actuator (1) which is constructed according to any of device claims 1-5.

## Revendications

1. Actionneur d'embrayage (1) pneumatique à auto-ajustement permettant l'actionnement d'un embrayage d'un véhicule automobile, lequel actionneur d'embrayage présente un boîtier (20) cylindrique annulaire et ouvert axialement sur un côté, et un piston annulaire (24) disposé de manière mobile axialement dans celui-ci, entre lesquels est formé un espace de pression (26), et dans lequel le piston annulaire (24) est relié à une butée de débrayage (18), laquelle s'appuie axialement contre un ressort d'embrayage (12) pour le réglage de celui-ci d'une position de non-actionnement à une position d'actionnement, dans lesquelles positions l'embrayage est fermé ou bien ouvert, et dans lequel un dispositif servant à la compensation d'un changement, lié à l'usure de l'embrayage, de la course d'actionnement pour l'ouverture ou la fermeture de l'embrayage est prévu, lequel dispositif présente une unité à broches (2) qui peut pivoter librement dans l'état non actionné de l'actionneur d'embrayage (1) et est bloquée lorsque l'actionneur d'embrayage (1) est actionné,
**caractérisé en ce que** l'unité à broches (2) est constituée de plusieurs broches individuelles (2a, 2b, 2c), lesquelles sont disposées de manière excentrique par rapport à l'axe médian longitudinal (30) de l'actionneur d'embrayage (1) et de manière espacée les unes des autres dans la direction périphérique et coopèrent de manière synchrone pour la compensation d'un changement, lié à l'usure de l'embrayage, de la course d'actionnement pour l'ouverture ou la fermeture de l'embrayage.

2. Actionneur d'embrayage selon la revendication 1, **caractérisé en ce**
- **que** la butée de débrayage (18) présente un support de butée de débrayage (3) annulaire qui est disposé de manière mobile axialement radialement à l'intérieur du piston annulaire (24),
- **que** le support de butée de débrayage (3) présente une chambre annulaire (16) proche de l'embrayage, dans laquelle la butée de débrayage (18) est disposée, dont la bague de palier rotative (19) est en contact ou peut être amenée en contact avec le ressort d'embrayage (12),
- **que,** pour l'actionnement de l'embrayage, en soumettant l'espace de pression (26) à l'action d'un fluide sous pression, le piston annulaire (24) est disposé de manière mobile axialement en direction du ressort d'embrayage (12), conjointement avec le support de butée de débrayage (3), à l'encontre de la force de ressort (Fk) du ressort d'embrayage (12),
- **que** le support de butée de débrayage (3) présente une chambre annulaire (17) éloignée de l'embrayage, dans laquelle au moins un ressort de précontrainte (55) est disposé,
- **que** le ressort de précontrainte (55) s'appuie, par l'une de ses extrémités axiales, contre un fond de piston annulaire (44) du piston annulaire (24) et, par son autre extrémité axiale, contre un fond (80) du support de butée de débrayage (3) séparant la chambre annulaire (16) proche de l'embrayage et la chambre annulaire (17) éloignée de l'embrayage du support de butée de débrayage (3), la force de ressort (Fv) du ressort de précontrainte (55) pressant la butée de débrayage (18), dans un équilibre de forces avec la force de ressort (Fk) du ressort d'embrayage (12), contre ledit ressort d'embrayage (12) dans sa position non actionnée lorsque l'espace de pression (26) est dépourvu de surpression, afin de régler, entre le piston annulaire (24) et le support de butée de débrayage (3), une distance d'équilibrage (A1, A2) axiale appropriée à la compensation de l'usure automatique de l'embrayage,
- **que** l'unité à broches (2) est disposée radialement à l'intérieur du support de butée de débrayage (3),
- **que** l'unité à broches (2) présente au moins trois broches (2a, 2b, 2c) comportant un filetage et disposées de manière répartie sur la périphérie du support de butée de débrayage (3), lesquelles broches viennent en prise dans des alésages (5) formés de manière correspondante à celles-ci et comportant un contre-filetage dans le support de butée de débrayage (3), de sorte que le support de butée de débrayage (3) est accouplé mécaniquement à l'unité à broches,
- **qu'**un élément de friction (7) et/ou un élément de liaison par complémentarité de formes sont disposés entre un fond de broche (6) respectif des broches (2a, 2b, 2c) et le fond de piston annulaire (44) du piston annulaire (24),
- **et que** les broches (2a, 2b, 2c) de l'unité à broches (2) sont reliées au piston annulaire (24) respectivement de manière rotative ainsi que de manière non mobile axialement à l'exception d'un faible jeu axial dans un interstice (50), ladite liaison étant telle que les broches (2a, 2b, 2c) peuvent pivoter respectivement autour de leur axe longitudinal (4) dans l'état dépourvu de pression de l'espace de pression (26) et ne peuvent pas pivoter lors d'une surpression dans l'espace de pression (26).

3. Actionneur d'embrayage selon la revendication 1 ou 2,
**caractérisé en ce que** les alésages (5) du support de butée de débrayage (3), lesquels reçoivent les broches (2a, 2b, 2c), présentent des douilles qui sont insérées fixement dans lesdits alésages (5) et sur lesquelles sont formés les contre-filetages pour la mise en prise des filetages des broches (2a, 2b, 2c).

4. Actionneur d'embrayage selon l'une des revendications 1 à 3,
**caractérisé en ce que** les broches (2a, 2b, 2c) de l'unité à broches (2) sont en liaison de réglage les unes avec les autres par l'intermédiaire d'un élément d'accouplement central tel qu'un disque denté.

5. Actionneur d'embrayage selon l'une des revendications 1 à 4,
**caractérisé en ce que** des moyens de réglage mécaniques permettant de rattraper l'usure ou de faciliter le rattrapage de l'usure dans le cas d'un embrayage usé sont associés à l'unité à broches (2).

6. Embrayage d'un véhicule automobile, comportant un actionneur
d'embrayage (1), lequel est conçu selon l'une des revendications de dispositif 1 à 5.
